# EUROPÄISCHE PATENTSCHRIFT

(11) **EP 1 746 318 B1**
(45) Veröffentlichungstag und Bekanntmachung des Hinweises auf die Patenterteilung: **14.11.2007**
(21) Anmeldenummer: 05015988.8
(22) Anmeldetag: 22.07.2005
(51) Int. Cl.: F16K 31/00, F16K 31/70, F16K 37/00

(54) **Verfahren und Vorrichtung zum Überwachen und Beurteilen der Funktion eines piezoelektrischen Aktors**
Method and device for supervising and assessing the function of a piezoelectric actuator
Méthode et dispositif pour surveiller et évaluer la fonction d'un déclencheur piézoélectrique

(43) Veröffentlichungstag der Anmeldung: 24.01.2007
(73) Patentinhaber: Delphi Technologies, Inc., Troy, MI 48007 (US)
(72) Erfinder: Sciortino, Giacomo G., 49076 Osnabrück (DE); Goat, Christopher A., North Meadow Offham, Kent, ME 19 5NU (GB)
(74) Vertreter: Manitz, Finsterwald & Partner GbR

(56) Entgegenhaltungen:
- EP-A- 1 167 729
- EP-A- 1 505 288
- DE-A1- 10 151 421
- US-A1- 2001 039 484
- US-B1- 6 384 512
- US-B1- 6 472 796

## Beschreibung

Die Erfindung betrifft ein Verfahren und eine Vorrichtung zum Überwachen und Beurteilen der Funktion eines piezoelektrischen Aktors.

Piezoelektrische Aktoren sind grundsätzlich bekannt und finden beispielsweise in Kraftstoffeinspritzventilen, so genannten piezoelektrischen Injektoren, Verwendung, um die Zufuhr von Kraftstoff in die Verbrennungskammer eines Verbrennungsmotors, z.B. eines Kraftfahrzeugs, zu steuern.

Ein bekannter piezoelektrischer Aktor umfasst ein Paket von typischerweise mehreren hundert übereinander gestapelten und piezoelektrische Eigenschaften aufweisenden Keramikschichten. Jede einzelne Keramikschicht kann durch Aufbringen einer entsprechenden elektrischen Ladung um einige Zehntel Mikrometer ausgedehnt werden, wodurch sich das gesamte Piezopaket je nach Anzahl der übereinander gestapelten Keramikschichten um mehrere Hundertstel Millimeter ausdehnt. Dies kann ausreichend sein, um eine Ventilnadel eines piezoelektrischen Injektors von ihrem Ventilsitz abzuheben und das Ventil zu öffnen.

Als problematisch hat sich bislang die Untersuchung von beschädigten piezoelektrischen Aktoren erwiesen, da defekte piezoelektrische Aktoren erst bei einem endgültigen Versagen als defekt erkannt werden konnten.

Oft resultiert das endgültige Versagen des piezoelektrischen Aktors aus einer übermäßigen lokalen Hitzeentwicklung, insbesondere an derjenigen Stelle, an welcher der Defekt seinen Ursprung hat. Aufgrund der lokalen Hitzeentwicklung können die zu der Fehlerstelle benachbarten Keramikschichten aufgeschmolzen bzw. an der Oberfläche der Keramikschichten angeordnete Passivierungsschichten und/oder eine Ummantelung des Piezopakets verkohlt werden, wodurch die ursprüngliche Fehlerstelle total zerstört wird. Auf diese Weise werden nicht nur Informationen über den Grund des Versagens des piezoelektrischen Aktors, d.h. über den ursprünglichen Defekt, sondern auch Details über die zeitliche Entwicklung der Schädigung vernichtet. Ein durch Hitzeentwicklung zerstörter piezoelektrischer Aktor kann sogar so stark beschädigt sein, dass nicht einmal mehr feststellbar ist, ob der Defekt des Aktors an dessen Oberfläche oder in dessen Innerem ausgelöst wurde.

Aus der EP-A-1167729 ist ein piezoelektrisch betriebenes Einspritzventil bekannt, bei dem die Klemmenspannung des piezoelektrischen Aktors nach Beendigung des Aufladevorgangs überwacht wird. Aus dem zeitlichen Verlauf des Spannungsabfalls kann eine Diagnoseaussage über den Zustand des zugehörigen Einspritzventils, z.B. dessen Füllstand, abgeleitet werden.

Ein Verfahren und eine Vorrichtung gemäß den Oberbegriffen der unabhängigen Ansprüche ist aus der US-B-6384512 bekannt.

Der Erfindung liegt die Aufgabe zugrunde, ein Verfahren und eine Vorrichtung zur Überwachung und Beurteilung der Funktionsfähigkeit eines piezoelektrischen Aktors zu schaffen, welches bzw. welche eine möglichst frühzeitige Erkennung eines Fehlers eines piezoelektrischen Aktors ermöglicht.

Zur Lösung der Aufgabe sind ein Verfahren und eine Vorrichtung gemäß den unabhängigen Ansprüchen vorgesehen.

Bei dem erfindungsgemäßen Verfahren zum Überwachen und Beurteilen der Funktion eines piezoelektrischen Aktors werden elektrische Entladungs- und Aufladungsvorgänge des Aktors überwacht und wird die Funktion des Aktors anhand des zeitlichen Verlaufs der Entladungs- bzw. Aufladungsvorgänge beurteilt.

Eine Abweichung des Ablaufs eines überwachten Entladungs- bzw. Aufladungsvorgangs von einem zu erwartenden Entladungs- bzw. Aufladungsvorgang eines fehlerfreien Aktors gibt einen Hinweis auf einen Defekt des Aktors. Dabei hat sich herausgestellt, dass selbst solche Defekte bereits eine merkliche Modifikation des zeitlichen Verlaufs der Entladungs- bzw. Aufladungsvorgänge bewirken, die nicht oder noch nicht gleich zu einem endgültigen Versagen des Aktors führen.

Mit dem erfindungsgemäßen Verfahren ist also eine frühzeitige Fehlererkennung möglich. Ein defekter Aktor kann dadurch bereits vor seiner vollständigen Zerstörung stillgelegt und der Defekt und insbesondere seine Ursache eingehend analysiert werden. Alternativ oder zusätzlich kann die zeitliche Entwicklung des Defekts bis hin zu einer vollständigen Zerstörung des Aktors untersucht werden. Eine derartige detaillierte Untersuchung der Entstehung und Entwicklung eines Defekts des piezoelektrischen Aktors ermöglicht es, zukünftige piezoelektrische Aktoren so zu modifizieren, dass der festgestellte Fehler weitgehend vermieden wird. Im Ergebnis lassen sich dadurch piezoelektrische Aktoren mit einer erhöhten Zuverlässigkeit und Lebensdauer schaffen.

Darüber hinaus lässt sich das Verfahren nicht nur zur Fehleranalyse, sondern auch zur Überwachung eines piezoelektrischen Aktors während seines bestimmungsgemäßen Einsatzes verwenden. Ist der Aktor Bestandteil eines piezoelektrischen Injektors eines Kraftfahrzeugverbrennungsmotors, so kann das Verfahren beispielsweise benutzt werden, um einen Fahrer des Kraftfahrzeugs möglichst frühzeitig vor dem Ausfall des Aktors bzw. des Einspritzventils zu warnen und somit einen rechtzeitigen Austausch zu ermöglichen.

Erfindungsgemäß wird ein elektrischer Pulsstrom an den Aktor angelegt, der zeitliche Verlauf einer über dem Aktor abfallenden elektrischen Spannung kontinuierlich ermittelt, die Wellenform des ermittelten Spannungsverlaufs mit einer Soll-Wellenform, die bei einer einwandfreien Funktion des Aktors zu erwarten ist, verglichen und die Funktion des Aktors anhand des Vergleichs der Wellenform des ermittelten Spannungsverlaufs mit der Soll-Wellenform beurteilt.

Untersuchungen haben ergeben, dass das Auftreten eines Defekts im Aktor in der Regel zu einer Abweichung der Wellenform des ermittelten Spannungsverlaufs von der Soll-Wellenform führt. Ein Aspekt der Erfindung besteht also darin, den zeitlichen Verlauf der über dem Aktor abfallenden Spannung zu überwachen und als Indikator für den Funktionszustand des Aktors zu verwenden. Dabei wird eine fehlerfreie Funktion des piezoelektrischen Aktors angenommen, solange die Wellenform des ermittelten Spannungsverlaufs mit der Soll-Wellenform übereinstimmt, wohingegen eine Abweichung der Wellenform des ermittelten Spannungsverlaufs von der Soll-Wellenform als ein frühzeitiger Hinweis auf den Beginn einer fehlerhaften Funktion des piezoelektrischen Aktors gewertet wird.

Sobald eine Fehlfunktion des piezoelektrischen Aktors festgestellt wird, kann die Stromzufuhr zu dem Aktor abgeschaltet und somit eine weitergehende Schädigung des Aktors verhindert werden. Dies ermöglicht eine eingehende Überprüfung des piezoelektrischen Aktors hinsichtlich der Ursache für die Fehlfunktion und ggf. einen Austausch des Aktors, bevor dieser durch z.B. eine übermäßige Hitzeentwicklung vollständig zerstört wird.

Bei einer anschließenden Fortsetzung des Betriebs des Aktors durch erneutes Anlegen des Pulsstroms und einer weitergehenden Beobachtung der aufgezeichneten Spannung sowie einer weiteren Unterprüfung des Aktors kann ferner die Entwicklung des Fehlers bis hin zu einer vollständigen Zerstörung des Aktors analysiert werden.

Aus der Art einer Abweichung der Wellenform des ermittelten Spannungsverlaufs von der Soll-Wellenform kann auf die Art der Schädigung des Aktors geschlossen werden. Hierbei wird ausgenutzt, dass bestimmte Defekte eine charakteristische Modifikation der Wellenform der über dem Aktor abfallenden Spannung verursachen.

Beispielsweise führen ein Oberflächenkurzschluss und ein innerer Kurzschluss des piezoelektrischen Aktors zu unterschiedlichen Veränderungen der Wellenform der über dem Aktor abfallenden Spannung. Grundsätzlich ist es sogar möglich, innerhalb der Gruppe von Oberflächenkurzschlüssen bzw. von inneren Kurzschlüssen verschiedene Fehlerquellen zu unterscheiden bzw. zu identifizieren.

Ferner ist es möglich, eine Schädigung festzustellen, die aus einer Materialermüdung einer z.B. metallstreifenförmigen externen Elektrode des piezoelektrischen Aktors resultiert. Typischerweise führt eine derartige Materialermüdung zu einer zumindest teilweisen Abtrennung der Elektrode von dem Piezopaket, wodurch der Aktor nur noch teilweise aufgeladen werden kann. Die daraus resultierende Verringerung der Kapazität des Aktors führt zu einer Erhöhung der Aufladungsgeschwindigkeit. Letztere bedeutet eine schnellere Spannungsänderung und äußert sich in einer steileren Steilheit der Flanke des Spannungspulses.

Bevorzugt ist es, wenn ein pulsbreitenmodulierter Strom an den Aktor angelegt wird. Bei einem Betrieb des Aktors zu Testzwecken ermöglicht dies eine genaue Simulation der bei bestimmungsgemäßem Gebrauch des Aktors auftretenden Strom/Spannungs-Bedingungen. Darüber hinaus ermöglicht die Pulsbreitenmodulation des an den Aktor angelegten Stroms eine Aufladung des Aktors mit einer exakt vorgegebenen Anzahl von diskreten Ladungspaketen, durch die eine bestimmte, über dem Aktor abfallende Spannung erreicht wird. Eine Abweichung des Verhältnisses zwischen der Anzahl von Ladungspaketen und der erreichten Spannung gibt einen Hinweis auf einen Fehler des piezoelektrischen Aktors.

Durch einen Strompuls wird der Aktor zunächst entladen und dann wieder definiert aufgeladen. Während der zwischen zwei Pulsen liegenden Zeit wird die aufgebrachte Ladung in dem Aktor gehalten. In diesem aufgeladenen Zustand ist das Piezopaket ausgedehnt, so dass beispielsweise eine Ventilnadel eines Einspritzventils auf dem zugehörigen Ventilsitz gehalten wird. Zwischen zwei Strompulsen, d.h. wenn die elektrische Ladung in dem Aktor gespeichert ist, reagiert der Aktor besonders empfindlich auf Defekte.

Eine Veränderung der zwischen zwei Strompulsen über dem Aktor abfallenden Spannung gibt einen Hinweis auf einen elektrischen Kurzschluss oder eine Selbstentladung des Aktors. Ferner deutet eine Erhöhung der Anzahl von Ladungspaketen, die zur Erreichung einer Zielspannung zwischen zwei Strompulsen erforderlich ist, auf einen elektrischen Kurzschluss oder eine Selbstentladung des Aktors seit dem letzten Ladungsbewegungsereignis hin. Umgekehrt gibt eine Verringerung der zur Erreichung der Zielspannung erforderlichen Anzahl von Ladungspaketen einen Hinweis auf eine zumindest teilweise Abtrennung eines Teils des Piezopakets.

Alternativ oder zusätzlich zu der Überwachung des Spannungsverlaufs kann auch der zeitliche Verlauf eines Leckstroms des Aktors ermittelt und die Funktion des Aktors anhand der Häufigkeit von erhöhten Leckströmen beurteilt werden.

Zwar treten erfahrungsgemäß auch bei einem einwandfrei funktionierenden piezoelektrischen Aktor hin und wieder Leckströme auf. Jedoch hat sich herausgestellt, dass die Häufigkeit und/oder die Stärke der Leckströme zunehmen bzw. zunimmt, wenn ein piezoelektrischer Aktor einen Defekt aufweist. Folglich kann eine Fehlfunktion des Aktors auch anhand einer signifikanten Häufung und/oder einer signifikanten Zunahme der Stärke von Leckströmen des Aktors frühzeitig ermittelt werden.

Durch eine gleichzeitige Überwachung der über dem Aktor abfallenden Spannung und der Leckströme ist die Wahrscheinlichkeit, dass ein Defekt frühzeitig erkannt und gegebenenfalls sogar korrekt identifiziert wird, erheblich erhöht.

Vorzugsweise werden bzw. wird der zeitliche Verlauf der ermittelten Spannung und/oder des ermittelten Leckstroms des Aktors in einem Speichermedium gespeichert. Dies ermöglicht eine genaue Analyse der zeitlichen Entwicklung eines Defekts im Aktor auch noch zu einem späteren Zeitpunkt.

Gemäß einer weiteren Ausführungsform wird bei einer vorbestimmten Form einer Abweichung der ermittelten Wellenform von der Soll-Wellenform und/oder bei einer Überschreitung einer vorgegebenen Häufigkeit und/oder Stärke eines erhöhten Leckstroms des Aktors ein Warnsignal ausgegeben. Dies ermöglicht eine frühzeitige Warnung vor einem drohenden Versagen des piezoelektrischen Aktors.

Dabei kann die vorgegebene Abweichung der aufgezeichneten Wellenform bzw. die vorgegebene Häufigkeit bzw. Stärke des Leckstroms, die zu einer Auslösung der Warnung führt, so gewählt werden, dass eine Deaktivierung und/oder ein Austausch des defekten piezoelektrischen Aktors möglich ist, bevor dieser vollständig zerstört wird. Ist der Aktor beispielsweise Teil eines piezoelektrischen Einspritzventils eines Kraftfahrzeugverbrennungsmotors, so kann der Fahrer des Kraftfahrzeugs so rechtzeitig auf den Defekt aufmerksam gemacht werden, dass ein Austausch des piezoelektrischen Aktors möglich ist, bevor die Motorleistung merklich beeinflusst wird.

Die erfindungsgemäße Vorrichtung dient der Durchführung des erfindungsgemäßen Verfahrens und ermöglicht somit die Erreichung der voranstehend genannten Vorteile.

Nachfolgend wird die Erfindung rein beispielhaft anhand einer vorteilhaften Ausführungsform unter Bezugnahme auf die Zeichnung beschrieben. Es zeigen:
- Fig. 1: eine schematische Darstellung einer erfindungsgemäßen Vorrichtung zur Überwachung und Beurteilung der Funktionsfähigkeit eines piezoelektrischen Aktors;
- Fig. 2: die Wellenform einer Spannung, die über einem piezoelektrischen Aktor abfällt, an welchen ein pulsbreitenmodulierter Strom angelegt ist;
- Fig. 3: die Auswirkung einer Selbstentladung auf die Wellenform einer Spannung, die über einem pulsbreitenmoduliert angetriebenen piezoelektrischen Aktor abfällt; und
- Fig. 4: die zeitliche Entwicklung des Leckstroms eines piezoelektrischen Aktors, der nach 856 Betriebsstunden versagte.

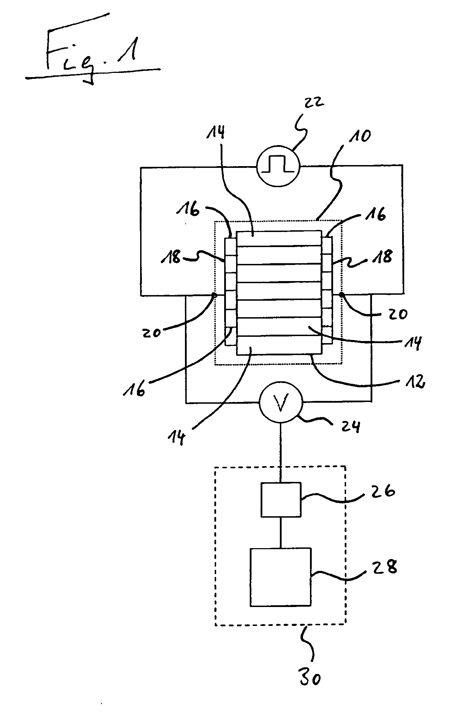

In Fig. 1 ist eine erfindungsgemäße Vorrichtung zur Überwachung und Beurteilung der Funktion eines piezoelektrischen Aktors 10 dargestellt.

Der Aktor 10 umfasst ein Piezopaket 12, welches aus mehreren hundert übereinander gestapelten Keramikschichten 14 gebildet ist, von denen in der Figur lediglich sieben beispielhaft dargestellt sind. Jede Keramikschicht 14 ist über zwei Elektroden 16 mit zwei Sammelelektroden 18 verbunden, die ihrerseits jeweils mit einem externen Anschluss 20 des Aktors 10 verbunden sind.

Über die Anschlüsse 20 ist der Aktor 10 mit einer Stromquelle 22 verbunden, die einen pulsbreitenmodulierten Pulsstrom an den Aktor 10 liefert.

Bei einer Verwendung des Aktors 10 in einem piezoelektrischen Einspritzventil eines Kraftfahrzeugverbrennungsmotors kann die Pulsbreite etwa 0,4 ms betragen und dabei 5 % einer Taktzeit ausmachen, so dass sich die Zeit zwischen zwei Strompulsen auf 95 % der Taktzeit und somit auf etwa 0,7 s beläuft.

Mittels einer Spannungsmesseinrichtung 24 wird kontinuierlich die über dem Aktor 10 und insbesondere über dem Piezopaket 12 abfallende elektrische Spannung gemessen. Die ermittelten Spannungswerte werden an eine Vergleichseinheit 26 übermittelt, in welcher der zeitliche Verlauf der gemessenen Spannungswerte, d.h. die Wellenform der aufgezeichneten Spannung, mit einer Soll-Wellenform verglichen wird, die bei einer einwandfreien Funktion des Aktors 10 zu erwarten ist. Die Vergleichseinheit 26 weist zu diesem Zweck eine nicht dargestellte Speichereinheit auf, in welcher die bei dem jeweiligen an den Aktor 10 angelegten pulsbreitenmodulierten Strom jeweils zu erwartende Wellenform der über dem Aktor 10 abfallenden Spannung gespeichert ist.

Sobald durch die Vergleichseinheit 26 eine Abweichung der aufgezeichneten Wellenform von der Soll-Wellenform festgestellt wird, gibt die Vergleichseinheit 26 ein entsprechendes Signal an eine Auswerteeinheit 28 aus, in welcher eine Beurteilung der Abweichung der aufgezeichneten Wellenform von der Soll-Wellenform erfolgt, beispielsweise hinsichtlich der Art, der Stärke und/oder der Häufigkeit der Abweichung.

Überschreitet die festgestellte Abweichung eine vorbestimmte Signifikanzschwelle, so kann durch die Auswerteeinheit 28 ein entsprechendes Warnsignal ausgegeben werden, um auf eine fehlerhafte Funktion des Aktors 10 hinzuweisen und/oder vor einem Versagen des Aktors 10 zu warnen.

Wie in Fig. 1 dargestellt ist, sind die Vergleichseinheit 26 und die Auswerteeinheit 28 in einer Recheneinheit 30 zusammengefasst. Grundsätzlich ist es aber auch möglich, die Vergleichseinheit 26 und die Auswerteeinheit 28 jeweils als getrennte Einheiten vorzusehen. Die Recheneinheit 30 kann ferner ein nicht gezeigtes Speichermedium umfassen, in welchem der zeitliche Verlauf der über dem Aktor 10 abfallenden Spannung über einen vorgegebenen Zeitraum gespeichert wird, z.B. über die gesamte Betriebsdauer des Aktors 10.

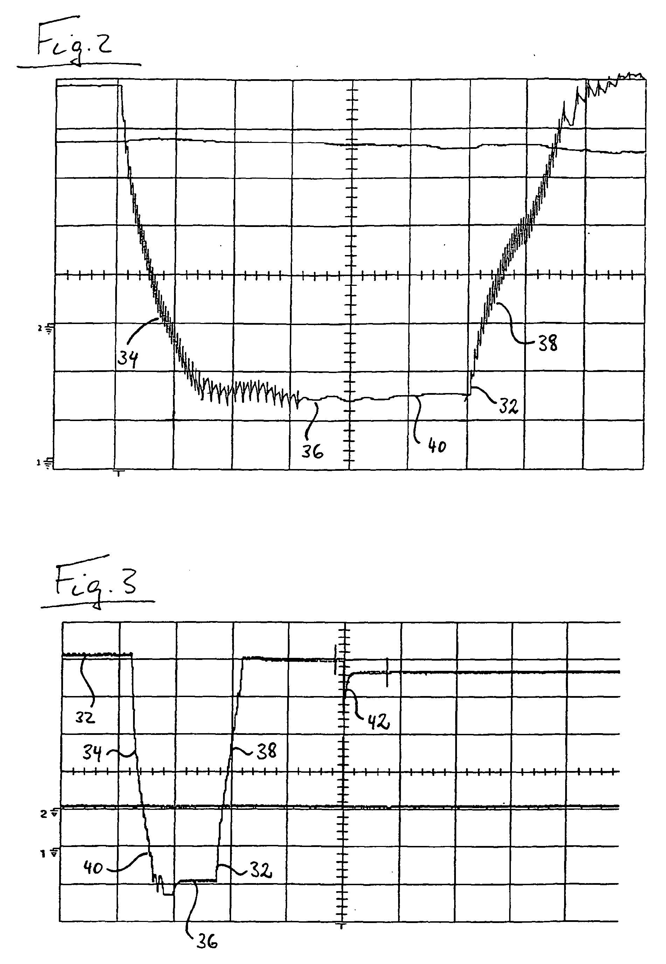

In Fig. 2 ist die Wellenform 32 der während eines durch die Stromquelle 22 ausgegebenen Strompulses über dem Aktor 10 abfallenden Spannung dargestellt. Die gemessene Spannung ist als Funktion der Zeit aufgetragen.

Durch den Strompuls wird der Aktor 10 zunächst elektrisch entladen (linke abfallende Flanke 34 der Wellenform 32), dann für eine gewisse Zeit in dem entladenen Zustand gehalten (Plateau 36 der Wellenform 32) und schließlich wieder elektrisch aufgeladen (rechte ansteigende Flanke 38 der Wellenform 32). Das Ergebnis ist also ein Spannungspuls 40, dessen Form von der Form des Strompulses abhängig ist.

Die Entladung des Aktors 10 bewirkt, dass der Aktor 10 seinen nicht ausgedehnten Normalzustand einnehmen und dadurch beispielsweise eine Ventilnadel von ihrem Ventilsitz abheben kann, um eine Injektion von Kraftstoff in eine Verbrennungskammer zu ermöglichen. Die anschließende elektrische Aufladung des Aktors 10 bewirkt eine erneute Ausdehnung des Aktors 10, wodurch die Ventilnadel wieder auf ihren Ventilsitz aufgedrückt und die Kraftstoffinjektion beendet wird.

Da der piezoelektrische Aktor 10 aufgrund seiner kapazitiven und induktiven Eigenschaften einen elektrischen Schwingkreis bildet, erfolgt die elektrische Entladung bzw. Aufladung des Aktors 10 durch ein abwechselndes Aufbringen und Abführen von Ladungspaketen auf bzw. von dem Aktor 10 in Form von kurzen Strompulsen. Diese sich hin- und herbewegenden Ladungspakete äußern sich in Form eines Sägezahnmusters, welches die abfallende und die ansteigende Flanke der Wellenform 32 der aufgezeichneten Spannung überlagert.

Die Form des Sägezahnmusters kann neben der Steilheit der abfallenden bzw. ansteigenden Flanken 34, 38 des Spannungspulses 40 zur Beurteilung der Funktion des piezoelektrischen Aktors 10 herangezogen werden.

So kann eine Erhöhung der Anzahl von zur Erreichung einer bestimmten Zielspannung erforderlichen Ladungspulsen einen elektrischen Kurzschluss oder einen Leckstrom nahe legen, der seit dem letzten Ladungsbewegungsereignis aufgetreten ist. Umgekehrt kann eine Verringerung der Anzahl von zur Erreichung einer bestimmten Zielspannung erforderlichen Ladungspulsen einen Hinweis auf eine mechanische Ablösung von Keramikschichten 14 vom verbleibenden Teil des Piezopakets 12 geben.

Eine erhöhte Steilheit der abfallenden bzw. ansteigenden Flanke 34, 38 ist ein Indiz für eine verringerte Kapazität des Aktors 10, die dadurch verursacht sein kann, dass lediglich ein Teil des Aktors 10 elektrisch entladen bzw. aufgeladen wird. Diese lediglich teilweise Entladung bzw. Aufladung des Aktors kann beispielsweise aus einer Beschädigung einer oder mehrerer Elektroden 16, z.B. aufgrund von Materialermüdung, resultieren.

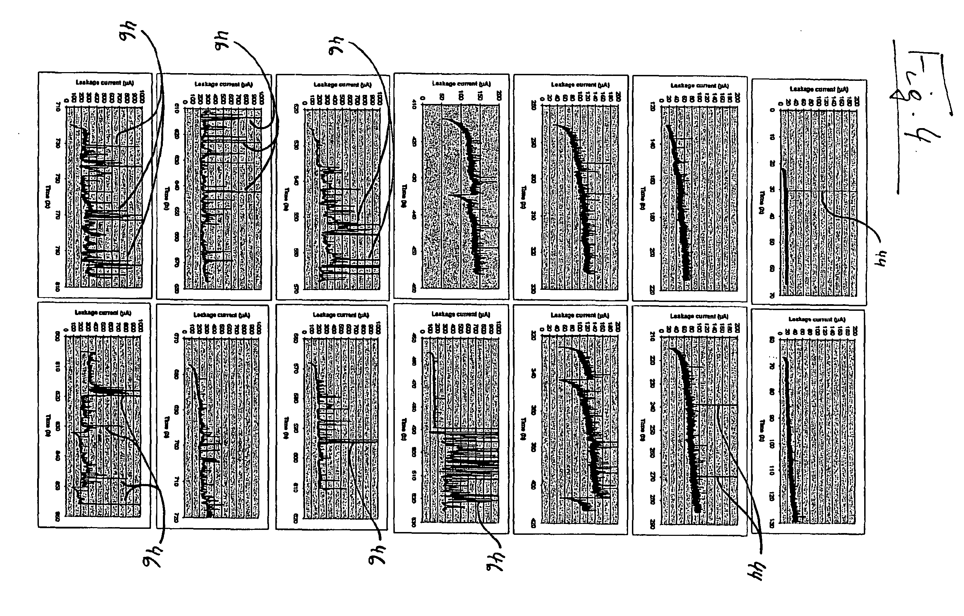

In Fig. 3 ist die Wellenform 32 einer über einem fehlerhaften Aktor 10 abfallenden Spannung dargestellt. Die Wellenform 32 zeigt zunächst eine reguläre elektrische Endladung und Aufladung mit entsprechenden abfallenden und ansteigenden Flanken 34, 38 eines Spannungspulses 40.

Unmittelbar nach dem Spannungspuls 40, d.h. zu Beginn des Zeitraums, in welchem sich der Aktor 10 im aufgeladenen Zustand befindet, erfolgt jedoch ein vorübergehender elektrischer Durchbruch 42, der sich in einem kurzzeitigen Spannungsabfall erheblichen Ausmaßes äußert und der zu einer reduzierten Aktorspannung während des Zeitraums zwischen den Spannungspulsen 40 führt. Die reduzierte Aktorspannung des aufgeladenen Aktors 10 gibt einen Hinweis auf einen elektrischen Kurzschluss oder einen Leckstrom des Aktors 10.

Zusätzlich oder alternativ zur Messung der über dem Aktor 10 abfallenden Spannung kann die Funktion des Aktors 10 auch durch eine kontinuierliche Aufzeichnung des Leckstroms des Aktors 10 überwacht werden. Die Messung des Leckstroms kann dabei durch eine in Fig. 1 nicht dargestellte Strommesseinrichtung erfolgen.

In Fig. 3 ist der zeitliche Verlauf eines Leckstroms eines piezoelektrischen Aktors 10 von dessen Inbetriebnahme bis hin zu dessen vollständiger Zerstörung nach einer Betriebsdauer von 856 Stunden dargestellt.

Wie der Figur zu entnehmen ist, werden während der ersten 480 Betriebsstunden lediglich vereinzelte Spitzen 44 von Leckströmen detektiert, z.B. nach 30 Stunden, nach 240 Stunden und nach 270 Stunden. Bei diesen vereinzelten Leckstromspitzen 44 handelt es sich um natürliche Selbstentladungen, die auch bei einem einwandfrei funktionierenden piezoelektrischen Aktor 10 auftreten können und die Funktion des Aktors 10 nicht beeinträchtigen.

Erst nach einer Betriebsdauer von etwa 490 Stunden ist ein gehäuftes Auftreten von Leckstromspitzen 46 feststellbar. Diese Leckstromspitzen 46 weisen überdies eine wesentlich höhere Stromstärke als die bei einem einwandfrei funktionierenden Aktor 10 auftretenden natürlichen Leckstromspitzen 44 auf. Die erhöhten Leckstromspitzen 46 treten bis zum endgültigen Versagen des piezoelektrischen Aktors 10 vermehrt auf. Die signifikante Häufung der erhöhten Leckstromspitzen 46 nach 490 Betriebsstunden markiert also die Entstehung eines Defekts in dem piezoelektrischen Aktor 10, der letztlich zu einem Versagen des Aktors 10 führt.

Da eine Häufung von erhöhten Leckstromspitzen 46 noch nicht unmittelbar zur Zerstörung des piezoelektrischen Aktors 10 führt, sondern vielmehr den Beginn einer zunehmenden Verschlechterung der Funktion bis hin zum völligen Versagen des Aktors 10 andeutet, eignet sich auch die Leckstromüberwachung zur Detektion eines Defekts im Aktor 10. Insbesondere ermöglicht die Leckstromüberwachung ebenso wie die Spannungsüberwachung eine frühzeitige Fehlererkennung und somit eine genaue Analyse des Fehlers bzw. der Fehlerentwicklung und/oder eine frühzeitige Warnung vor einem Versagen des Aktors 10.

### Bezugszeichenliste

- 10: Aktor
- 12: Piezopaket
- 14: Keramikschicht
- 16: Elektrode
- 18: Sammelelektrode
- 20: Anschluss
- 22: Stromquelle
- 24: Spannungsmesseinrichtung
- 26: Vergleichseinheit
- 28: Auswerteeinheit
- 30: Recheneinheit
- 32: Wellenform
- 34: abfallende Flanke
- 36: Plateau
- 38: ansteigende Flanke
- 40: Spannungspuls
- 42: Durchbruch
- 44: Leckstromspitze
- 46: Leckstromspitze

## Patentansprüche

1. Verfahren zum Überwachen und Beurteilen der Funktion eines piezoelektrischen Aktors (10), bei dem ein elektrischer Pulsstrom an den Aktor (10) angelegt wird, elektrische Entladungs- und Aufladungsvorgänge des Aktors (10) überwacht werden und die Funktion des Aktors (10) anhand des zeitlichen Verlaufs der Entladungs- bzw. Aufladungsvorgänge beurteilt wird,
**dadurch gekennzeichnet, dass**
der zeitliche Verlauf einer über dem Aktor (10) abfallenden elektrischen Spannung kontinuierlich ermittelt wird, die Wellenform (32) des ermittelten Spannungsverlaufs mit einer Soll-Wellenform, die bei einer einwandfreien Funktion des Aktors (10) zu erwarten ist, verglichen wird und die Funktion des Aktors (10) anhand des Vergleichs der Wellenform (32) des ermittelten Spannungsverlaufs mit der Soll-Wellenform beurteilt wird.

2. Verfahren nach Anspruch 1,
**dadurch gekennzeichnet, dass**
aus der Art einer Abweichung der Wellenform (32) des ermittelten Spannungsverlaufs von der Soll-Wellenform, auf die Art einer Schädigung des Aktors (10) geschlossen wird.

3. Verfahren nach Anspruch 1 oder 2,
**dadurch gekennzeichnet, dass**
der zeitliche Verlauf eines Leckstroms des Aktors (10) ermittelt wird und die Funktion des Aktors (10) anhand der Häufigkeit von erhöhten Leckströmen beurteilt wird.

4. Verfahren zum Überwachen und Beurteilen der Funktion eines piezoelektrischen Aktors (10), bei dem elektrische Entladungs- und Aufladungsvorgänge des Aktors (10) überwacht werden und die Funktion des Aktors (10) anhand des zeitlichen Verlaufs der Entladungs- bzw. Aufladungsvorgänge beurteilt wird,
**dadurch gekennzeichnet, dass**
der zeitliche Verlauf eines Leckstroms des Aktors (10) ermittelt wird und die Funktion des Aktors (10) anhand der Häufigkeit von erhöhten Leckströmen beurteilt wird.

5. Verfahren nach einem der vorherigen Ansprüche,
**dadurch gekennzeichnet, dass**
der zeitliche Verlauf der ermittelten Spannung und/oder eines ermittelten Leckstroms des Aktors (10) in einem Speichermedium gespeichert werden bzw. wird.

6. Verfahren nach einem der vorherigen Ansprüche,
**dadurch gekennzeichnet, dass**
bei einer vorbestimmten Form einer Abweichung der ermittelten Wellenform (32) von der Soll-Wellenform und/oder bei einer Überschreitung einer vorgegebenen Häufigkeit und/oder Stärke eines erhöhten Leckstroms des Aktors (10) ein Warnsignal ausgegeben wird.

7. Verfahren nach einem der vorherigen Ansprüche,
**dadurch gekennzeichnet, dass**
ein pulsbreitenmodulierter Strom an den Aktor (10) angelegt wird.

8. Vorrichtung zur Überwachung und Beurteilung der Funktion eines piezoelektrischen Aktors (10) mit einer Stromquelle (22) zum Anlegen eines elektrischen Pulsstroms an den Aktor (10), einer Messeinrichtung (24) zum kontinuierlichen Ermitteln des zeitlichen Verlaufs einer über dem Aktor (10) abfallenden elektrischen Spannung und/oder eines Leckstroms des Aktors (10) und einer Auswerteeinheit (28), um die Funktion des Aktors (10) anhand eines Vergleichs der Wellenform (32) des ermittelten Spannungsverlaufs mit einer bei einer einwandfreien Funktion des Aktors (10) zu erwartenden Soll-Wellenform bzw. anhand des zeitlichen Verlaufs des Leckstroms zu beurteilen.

9. Vorrichtung nach Anspruch 8,
**dadurch gekennzeichnet, dass**
ein Speichermedium vorgesehen ist, um den zeitlichen Verlauf der Spannung und/oder des Leckstroms zu speichern.

10. Vorrichtung nach Anspruch 8 oder 9,
**dadurch gekennzeichnet, dass**
eine Warneinrichtung vorgesehen ist, um bei einer vorbestimmten Form einer Abweichung der ermittelten Wellenform (32) von der Soll-Wellenform und/oder bei einer Überschreitung einer vorgegebenen Häufigkeit und/oder Stärke eines erhöhten Leckstroms des Aktors (10) ein Warnsignal auszugeben.

## Claims

1. A method for the monitoring and evaluation of the operation of a piezoelectric actuator (10), wherein an electrical pulse current is applied to the actuator (10), electrical discharging and charging processes of the actuator (10) are monitored and the operation of the actuator (10) is evaluated with reference to the time course of the discharging and charging processes,
**characterized in that**
the time course of an electrical voltage dropped across the actuator (10) is continuously determined, the wave shape (32) of the determined voltage curve is compared with a desired wave shape to be expected with a problem-free operation of the actuator (10) and the operation of the actuator (10) is evaluated with reference to the comparison of the wave shape (32) of the determined voltage curve with the desired wave shape.

2. A method in accordance with claim 1, **characterized in that** a conclusion is drawn on the type of damage to the actuator (10) from the type of a deviation of the wave shape (32) of the determined voltage curve from the desired wave shape.

3. A method in accordance with claim 1 or claim 2, **characterized in that** the time course of a leakage current of the actuator (10) is determined and the operation of the actuator (10) is evaluated with reference to the frequency of increased leakage currents.

4. A method for the monitoring and evaluation of the operation of a piezoelectric actuator (10), wherein electrical discharging and charging processes of the actuator (10) are monitored and the operation of the actuator (10) is evaluated with reference to the time course of the discharging and charging processes,
**characterized in that**
the time course of a leakage current of the actuator (10) is determined and the operation of the actuator (10) is evaluated with reference to the frequency of increased leakage currents.

5. A method in accordance with any one of the preceding claims, **characterized in that** the time course of the determined voltage and/or of a determined leakage current of the actuator (10) is or are stored in a storage medium.

6. A method in accordance with any one of the preceding claims, **characterized in that** with a predetermined form of a deviation of the determined wave shape (32) from the desired wave shape and/or on an exceeding of a predetermined frequency and/ or strength of an increased leakage current of the actuator (10), a warning signal is output.

7. A method in accordance with any one of the preceding claims, **characterized in that** a pulse width modulated current is applied to the actuator (10).

8. An apparatus for the monitoring and evaluation of the operation of a piezoelectric actuator (10) comprising a current source (22) for the application of an electrical pulse current to the actuator (10), a measuring device (24) for the determination of the time course of an electrical voltage dropped across the actuator (10) and/or of a leakage current of the actuator (10) and an evaluation unit (28) to evaluate the operation of the actuator (10) with reference to a comparison of the wave shape (32) of the determined voltage curve with a desired wave shape to be expected with a problem-free operation of the actuator (10) or with reference to the time course of the leakage current.

9. An apparatus in accordance with claim 8, **characterized in that** a storage medium is provided to store the time course of the voltage and/or of the leakage current.

10. An apparatus in accordance with claim 8 or claim 9, **characterized in that** a warning device is provided to output a warning signal on a predetermined shape of a deviation of the determined wave shape (32) from the desired wave shape and/or on an exceeding of a predetermined frequency and/or strength of an increased leakage current of the actuator (10).

## Revendications

1. Procédé de surveillance et d'évaluation du fonctionnement d'un actionneur piézo-électrique (10), dans lequel un courant électrique pulsé est appliqué à l'actionneur (10), les processus de déchargement et de chargement de l'actionneur (10) sont surveillés, et le fonctionnement de l'actionneur (10) est évalué au vu de l'évolution, dans le temps, des processus de déchargement et de chargement,
**caractérisé en ce que**
l'évolution, dans le temps, de la tension électrique décroissant à travers l'actionneur (10) est déterminée en continu, la forme d'onde (32) de la courbe de tension ainsi déterminée est comparée à une forme d'onde de consigne que l'on peut attendre dans le cas d'un fonctionnement correct de l'actionneur (10), et le fonctionnement de l'actionneur (10) est évalué à l'aide de la comparaison entre la forme d'onde (32) de la courbe de tension déterminée, et la forme d'onde de consigne.

2. Procédé selon la revendication 1, **caractérisé en ce qu'**en cas d'écart entre la forme d'onde (32) déterminée de la courbe de tension et la forme d'onde de consigne, des conclusions sont tirées quant à la nature d'un endommagement de l'actionneur (10).

3. Procédé selon la revendication 1 ou 2, **caractérisé en ce que** l'évolution, dans le temps, d'un courant de fuite de l'actionneur (10) est déterminée, et le fonctionnement de l'actionneur (10) est évalué au vu de la fréquence d'apparition de courants de fuite élevés.

4. Procédé de surveillance et d'évaluation du fonctionnement d'un actionneur piézo-électrique (10), dans lequel des processus de déchargement et de chargement électriques de l'actionneur (10) sont surveillés, et le fonctionnement de l'actionneur (10) est évalué au vu de l'évolution, dans le temps, des processus de déchargement et de chargement,
**caractérisé en ce que**
l'évolution, dans le temps, d'un courant de fuite de l'actionneur (10) est déterminée, et que le fonctionnement de l'actionneur (10) est évalué par l'intermédiaire de la fréquence d'apparition de courants de fuite élevés.

5. Procédé selon l'une des revendications précédentes, **caractérisé en ce que** l'évolution, dans le temps, de la tension déterminée et/ou d'un courant de fuite déterminé de l'actionneur (10) est/sont stocké(es) sur un support de stockage.

6. Procédé selon l'une des revendications précédentes, **caractérisé en ce qu'**en présence d'une forme prédéterminée de déviation de la forme d'onde déterminée (32) face à la forme d'onde de consigne, et/ou en cas de dépassement d'une fréquence d'apparition prédéterminée et/ou intensité d'un courant de fuite élevé de l'actionneur (10), un signal d'avertissement est émis.

7. Procédé selon l'une des revendications précédentes, **caractérisé en ce que** c'est un courant à modulation de la durée d'impulsion qui est appliqué à l'actionneur (10).

8. Dispositif de surveillance et d'évaluation du fonctionnement d'un actionneur piézo-électrique (10), comprenant une source d'alimentation électrique (22) destinée à appliquer un courant électrique pulsé à l'actionneur (10), un dispositif de mesure (24) destiné à déterminer en continu l'évolution, dans le temps, d'une tension électrique décroissant à travers l'actionneur (10) et/ou d'un courant de fuite de l'actionneur (10), et un dispositif d'analyse (28),
destiné à évaluer le fonctionnement de l'actionneur (10) grâce à une comparaison entre la forme d'onde (32) de la courbe de tension déterminée, et une forme d'onde de consigne que l'on peut attendre lors d'un fonctionnement sans défaut de l'actionneur (10), ou grâce à l'évolution, dans le temps, du courant de fuite.

9. Dispositif selon la revendication 8, **caractérisé en ce qu'**un support de stockage est prévu pour enregistrer l'évolution, dans le temps, de la tension et/ou du courant de fuite.

10. Dispositif selon la revendication 8 ou 9, **caractérisé en ce qu'**un dispositif d'avertissement est prévu pour émettre un signal d'avertissement en cas de déviation, d'une forme prédéterminée, de la forme d'onde déterminée (32) par rapport à la forme d'onde de consigne, et/ou en cas de dépassement d'une fréquence d'apparition prédéterminée et/ou d'une intensité prédéterminée d'un courant de fuite élevé de l'actionneur (10).
